# EUROPEAN PATENT APPLICATION

(11) **EP 2 395 458 A1**
(43) Date of publication of application: **14.12.2011**
(21) Application number: 11169522.7
(22) Date of filing: 10.06.2011
(51) Int. Cl.: G06K 19/04, F16L 47/26

(54) **Werkwijze voor het vervaardigen van een leidingonderdeel**

(30) Priority: 10.06.2010 NL 2004867
(71) Applicant: Pipelife Nederland B.V., 1601 MA Enkhuizen (NL)
(72) Inventor: Ploeg, Mark, 1674 PX Opperdoes (NL); Scucces, Marcel Roger, 1461 DM Zuidoostbeemster (NL)
(74) Representative: Ketelaars, Maarten F.J.M.

(57) **Abstract**

A method for producing a conduit part comprises
- providing the conduit part;
- providing quality data of the conduit part;
- connecting the conduit part to an electronic identification device which is provided with an identification datum;
- reading out an identification datum from the electronic identification device;
and
- providing the visual coding on an outer wall of the conduit part, wherein the visual coding comprises at least an indication of the identification datum of the electronic identification device.

## Description

The invention relates to a method for producing a conduit part. Furthermore, the invention relates to a conduit part produced according to the method.

A conduit assembly is known from the prior art which consists of conduit parts such as pipes and accessories. Accessories are for example couplings, valves and attachments. Couplings serve to connect two pipes to one another. A coupling may be provided with an angle so that two pipes can be coupled to one another at an angle. A valve serves to close a (part of a) pipe so that the flow of a gas or liquid through the pipe can be controlled during use.

An attachment can be placed on a wall of a pipe by means of a saddle. After drilling a hole with the attachment serving as a template, a branch of the pipe can be produced. With pipe systems for conveying gasses or liquids, it is important that the quality of the conduit assembly and the parts thereof is guaranteed as much as possible. In particular for networks which comprise a large number of conduit parts, quality issues of individual components which may be small as such can still result in problems, if there is no traceability for the conduit parts.

This is a particular problem with plastic conduits for conveying (natural) gas, water or chemicals.

A problem of the prior art is that often when a conduit assembly is being constructed, several and different parts are assembled and possibly installed below the ground, following which the precise location of each conduit part in the conduit assembly is no longer known. This can lead to problems if a part has to be replaced due to a lack of quality which becomes apparent at a later point in time. This problem becomes even greater if it is not possible either to determine in which conduit assembly the respective conduit part has been installed.

It is an object to provide conduit parts which reduce and/or eliminate the problem of the prior art.

This object is achieved by the method for the production of traceable conduit parts according to Claim 1.

The invention provides a method for producing a conduit part, comprising:
- providing the conduit part;
- providing an electronic identification device which is provided with an identification datum;
- providing quality data of the conduit part;
- fitting the electronic identification device on an outer wall of the conduit part in order to connect the conduit part to the electronic identification device;
- reading out an identification datum from the electronic identification device;
   and
- providing the visual coding on an outer wall of the conduit part, wherein the visual coding comprises at least an indication of the identification datum of the electronic identification device,
wherein the electronic identification device is arranged between a clamping part and the outer wall of the conduit part, wherein the clamping part is configured to keep the electronic identification device in a fixed location on the outer wall.

A unique identification for the conduit part is acquired from the identification datum which is situated in the electronic identification device, thus making it readily possible to trace the conduit part accurately. In a preferred embodiment, the electronic identification device consists of an RFID tag or comprises an RFID chip. The information from such an electronic identification device can be read out wirelessly. The visual coding of the unique datum of the conduit part allows identification in order to carry out an inspection of the conduit assembly during which the position or location of the conduit part can also be verified or determined. The visual coding also makes it possible to follow the course of the service life of the conduit part from the moment the visual coding is applied. In addition, it makes inspection of the conduit part simpler.

In an embodiment, the invention provides the method as described above, wherein the method furthermore comprises:
- linking the identification datum of the electronic identification device with the quality data of the conduit part,
wherein the linking comprises storing the quality data of the conduit part in a programmable memory of the electronic identification device, wherein the stored quality data can be read from the electronic identification device.

This makes the unique identification of the conduit part electronically readable for an electronic tool. By making use of an electronic read-out tool, the conduit part can be traced in an advantageous manner from the moment the quality data have been stored in the electronic identification device.

The quality data of the conduit part may comprise one or more of the following data: composition (code) of the material of the conduit part, production date, production batch number, production number, batch number of the components used. Other data which are connected to the quality data of the part are also conceivable, such as installation data of the fitter (for example when and by whom), maintenance data (for example an inspection or check-up date), repair data, etc.

In an embodiment, the invention provides the method as described above, furthermore comprising:
- linking the identification datum of the electronic identification device with the quality data of the conduit part,
wherein the linking comprises:
- storing the identification datum of the electronic identification device and the quality data of the conduit part in an external database.

In an embodiment, the invention provides the method as described above, wherein the method comprises determining a location of the conduit part as part of the quality data of the conduit part. The data of the location can be determined in various ways, for example on the basis of coordinates such as GPS, but for example also by indicating a street address, or a house number of a building in which the conduit part is installed. In an embodiment, the invention provides the method as described above, wherein an indication of the visual coding is stored with the stored data in the external database. In an embodiment, the invention provides the method as described above, wherein the visual coding also comprises an indication of one or more quality data of the conduit part.

In an embodiment, the invention provides the method as described above, wherein connecting the conduit part to the electronic identification device comprises: providing a recess in the inner wall or outer wall of the conduit part, the recess being configured to accommodate the electronic identification device, and click-fitting or pushing the electronic identification device into the recess.

In an embodiment, the invention provides the method as described above, wherein providing the visual coding on the outer wall of the conduit part is carried out by printing the visual coding or by engraving the visual coding or by laser-engraving the visual coding or by applying a label containing the visual coding.

In an embodiment, the invention provides the method as described above, wherein the visual coding is arranged on a clamping sleeve.

In an embodiment, the invention provides the method as described above, wherein the clamping sleeve is made from plastic and the electronic identification device is cast in the clamping sleeve.

In an embodiment, the invention provides the method as described above, wherein the clamping part is made completely or in part from transparent material, and the electronic identification device is included in a card which will be/is provided with the visual coding, wherein the card is placed between the outer wall of the conduit part and the clamping part, in such a manner that the visual coding on the card is visible. Furthermore, the invention provides a conduit part provided with an electronic identification device, wherein the conduit part comprises a visual coding on an outer wall, wherein the visual coding comprises at least an indication of the identification datum of the electronic identification device, and wherein the electronic identification device which is provided with an identification datum is arranged on or in an outer wall of the conduit part between a clamping part and the outer wall of the conduit part, wherein the clamping part is configured to keep the electronic identification device in a fixed location on the outer wall.

In an embodiment, the invention provides the conduit part as described above, wherein the conduit part comprises a visual coding on an outer wall, wherein the visual coding comprises at least an indication of the identification datum of the electronic identification device.

In an embodiment, the invention provides the conduit part as described above, wherein the electronic identification device comprises a programmable memory for storing data, and wherein quality data of the conduit part are stored in the programmable memory, and wherein the stored quality data can be read from the electronic identification device.

In an embodiment, the invention provides the conduit part as described above, wherein the electronic identification device is provided with a wireless data interface for reading out data from the electronic identification device by wireless communication between the electronic identification device and a read-out device via the wireless data interface. As a result thereof, it becomes possible to trace and identify the conduit part wirelessly. In an embodiment, the invention provides the conduit part as described above, wherein the electronic identification device is provided with a wireless data interface for storing the quality data of the conduit part in the programmable memory by wireless communication between the electronic identification device and a programming device for programming the programmable memory.

In this way, programming the electronic identification device is simplified as no mechanical link between the electronic identification device and the programming tool is required.

In an embodiment, the invention provides the conduit part as described above, wherein the electronic identification device is arranged between two parts of the conduit part. In an embodiment, the invention provides the conduit part as described above, wherein the visual coding of the linked data comprises one or more of a barcode, a readable script code or a symbol code. The symbol code may be displayed in any manner in a recognizable pattern of a series of symbols, but may, for example, also be a geometric pattern of, for example, rectangles, dots, bars, circles, etc.

Thus, depending on the selected form, the visual coding can be read by a barcode reader in the case of a barcode, by a human observer in the case of a readable script code or in general by a pattern recognition system. Incidentally, other useful visual codings are conceivable within the scope of the invention.

In an embodiment, the invention provides the conduit part as described above, wherein a clamping sleeve is the clamping part for keeping the electronic identification device in a fixed location on the outer wall.

In this case, the advantageous result of this is that the electronic identification device and visual coding are situated in each other's vicinity, thereby making localization for an electronic inspection easier.

Further embodiments according to the present invention are described in the subclaims. The invention will be described below in more detail with reference to a few drawings which show some exemplary embodiments. The drawings are only intended for illustrative purposes and do not serve as a limitation of the inventive idea which is defined by the attached claims. In the drawings:
Fig. 1 diagrammatically shows a conduit part according to an embodiment of the invention;
Fig. 2 diagrammatically shows a conduit part according to an embodiment of the invention;
Fig. 3 diagrammatically shows a conduit part according to an embodiment of the invention;
Fig. 4 diagrammatically shows a conduit part according to an embodiment of the invention.

In the following figures, identical components in these figures are designated by the same reference numerals.

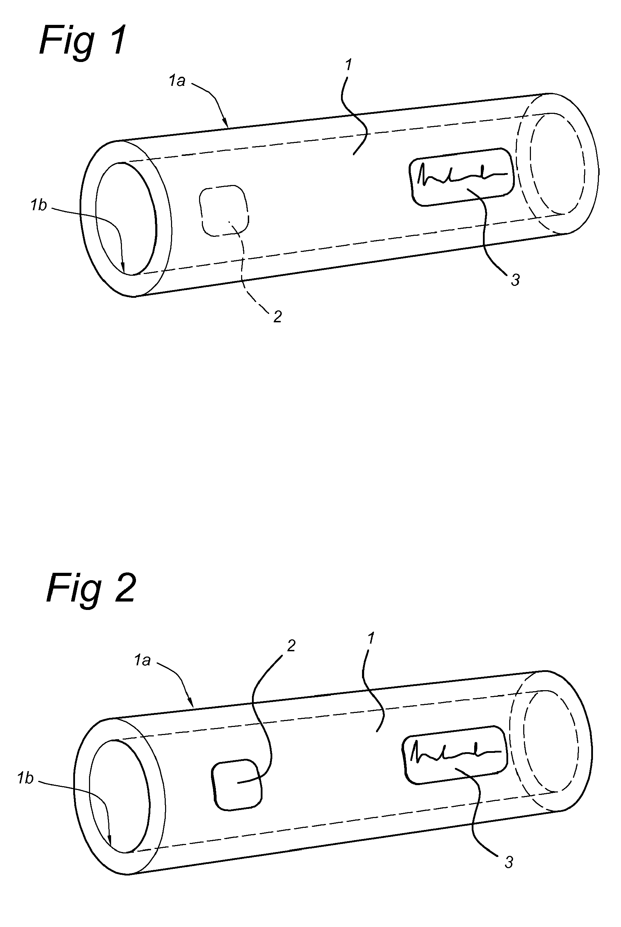

Fig. 1 diagrammatically shows a conduit part according to an embodiment of the invention.

In the following, the conduit part 1 is in each case denoted as a tubular part. However, the conduit part can also be an accessory which is connected to or coupled between pipe parts. Examples of accessories are couplings, valves and attachments. The invention applies equally to pipes and to accessories for conduit assemblies.

The conduit part 1 comprises an outer wall 1a and an inner wall 1b, wherein the inner wall forms the boundary surface of a volume inside the conduit part through which liquid or gas can flow during use.

The conduit part comprises an electronic identification device 2 which is connected to the inner wall 1b and a surface for a visual coding 3 on the outer wall 1a.

The visual coding is determined on the basis of linked data which have been obtained from quality data of the conduit part and an identification datum from the electronic identification device.

To this end, the invention comprises the following method:
- providing the conduit part;
- providing quality data of the conduit part;
- connecting the conduit part to an electronic identification device;
- reading out an identification datum from the electronic identification device;
- providing the visual coding on the surface of the outer wall of the conduit part, with the visual coding at least comprising an indication of the identification datum of the electronic identification device.

In this way, an unambiguous identification of the conduit part is achieved.

In an embodiment, the method comprises non-releasably fitting the electronic identification device in or on the conduit part. Subsequently, an identification datum such as for example a serial number is read out.

Thereafter, the identification datum is sent to a device which provides the visual coding. In this case, a coding in the form of a barcode, letters or symbols is provided, which coding is associated with at least the identification datum. This coding is transferred to the outer wall of the conduit part.

In a further embodiment, the method comprises linking the identification datum of the electronic identification device to the quality data of the conduit part. In this way, the visual coding can also comprise an indication of one or more quality data of the conduit part.

By linking the identification datum situated in the electronic identification device and the quality data of the conduit part for the conduit part, it becomes possible to assure the quality of the conduit part during the production cycle and during its life span.

The quality data of the conduit part may comprise one or more of the following data: composition (code) of the material of the conduit part, the production date, the production batch number, a production number. Other data which are linked to the quality data of the part are also conceivable.

The connection between the electronic identification device and the conduit part is configured in such a manner that the electronic identification device and the conduit part are non-releasably connected. In an embodiment, the connection comprises a break indication in the form of a seal or a break component which breaks when the connection between the electronic identification device and the conduit part is broken. By means of this break indication, it is possible to determine whether the connection is still intact or not.

The electronic identification device 2 can be attached to the inner wall by gluing. Alternatively, the electronic identification device can be held in a fixed position against the inner wall 1b by a clamping part.

In another embodiment, the conduit part 1 is provided with a recess on the inner wall into which the electronic identification device 2 can be click-fitted or pushed.

It is furthermore essential that the electronic identification device 2 connected to the conduit part is thus protected against the environment. This prevents the electronic identification device 2 from being damaged or becoming detached from the conduit part when the conduit part is being installed or fitted. For example when the conduit part is being installed underground.

The visual coding 3 of the linked data may comprise one or more of a barcode, a readable script code or a symbol code.

The symbol code may, in addition or as an alternative, contain a pictogram which indicates a function for the conduit part.

The visual coding may be applied by printing the visual coding or by engraving the visual coding or by laser-engraving the visual coding or by applying a label containing the visual coding, but it is also possible to use another method.

In an embodiment, the electronic identification device comprises a programmable memory for storing data.

In this case, the method provides that the linking of the identification datum of the electronic identification device to the quality data of the conduit part comprises storing the quality data of the conduit part in the programmable memory, the stored quality data being readable from the electronic identification device. Preferably, the programmable memory is protected against overwriting data once they have been stored. The person skilled in the art will know suitable types of memory. Alternatively, the quality data and the identification datum can be stored in an external database, for example if the electronic identification device is not programmable.

In case of storage in an external database, an indication of the visual coding can be stored with the externally stored quality data and identification datum. The stored indication may be an illustration of the visual coding.

The use of an external database for storing the quality data of the conduit part linked to the identification datum of the electronic identification device may be advantageous in network management. In this case, the method comprises determining the location of the conduit part as part of the quality data of the conduit part, so that data about the location of the conduit part in the conduit assembly are also stored in the external database. In this way, the location of the conduit part is registered.

Fig. 2 diagrammatically shows a conduit part according to an embodiment of the invention.

In this embodiment, the electronic identification device 2 is arranged on the outer wall of the conduit part 1.

The connection between the electronic identification device and the conduit part is produced in such a way that the electronic identification device and the conduit part are non-releasably connected, that is to say that, under normal circumstances during processing of the conduit part and during use, the electronic identification device does not become detached from the conduit part.

This embodiment can be used when the electronic identification device cannot be fitted to the inner wall 1b in a fixed location. For example, there may be a standard relating to a certain application of the conduit assembly which does not allow parts to be fitted to the inner wall of conduit parts.

In another embodiment, the conduit part 1 is provided with a recess on the outer wall into which the electronic identification device 2 can be click-fitted or pushed.

It is essential that the electronic identification device 2 connected in this way to the conduit part is protected against the environment. This prevents the electronic identification device 2 from being damaged and/or from becoming detached from the conduit part when the conduit part is being installed or fitted.

In yet another alternative embodiment, the method provides that the process step of connecting the conduit part to the electronic identification device comprises casting the electronic identification device in the conduit part.

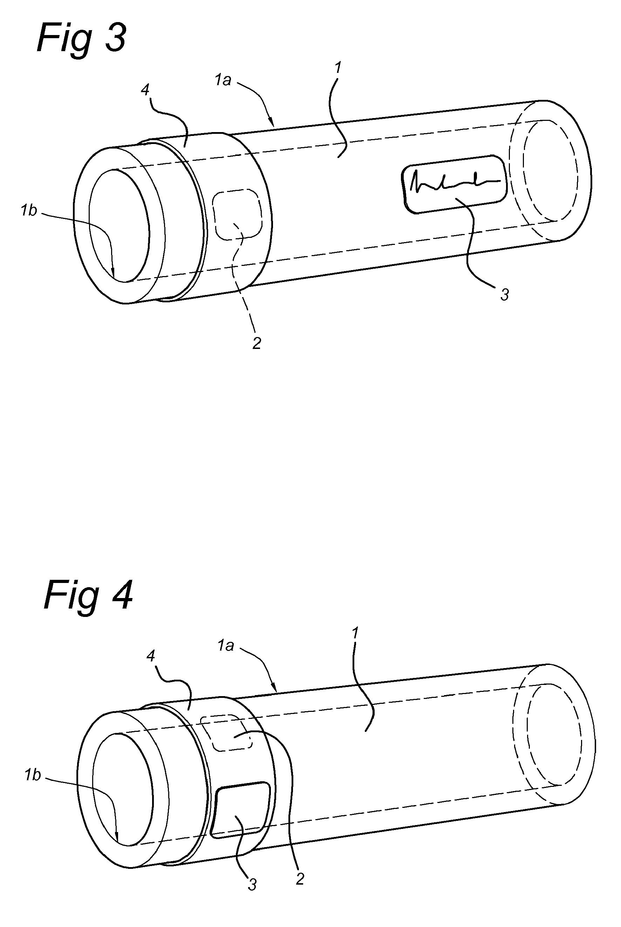

Fig. 3 diagrammatically shows a conduit part according to an embodiment of the invention.

In this embodiment, the electronic identification device 2 is arranged between a clamping part 4 and the outer wall 1a of the conduit part 1, the clamping part being configured to keep the electronic identification device in a fixed location on the outer wall.

The clamping part is arranged on the conduit part in such a manner that a non-releasable connection is produced between the electronic identification device and the conduit part.

Alternatively, the electronic identification device 2 may be fitted on or to a clamping sleeve 4 which is arranged around the conduit part 1. In an embodiment, the clamping sleeve of the clamping part is made from (optionally transparent) plastic and the electronic identification device 2 is cast in the clamping sleeve.

In an embodiment, the electronic identification device 2 is arranged between two parts which make up the conduit part.

Fig. 4 diagrammatically shows a conduit part according to an embodiment of the invention.

In this embodiment, both the electronic identification device 2 and the surface for the visual coding 3 are provided on or in the clamping part or the clamping sleeve.

In an embodiment, the clamping sleeve is made completely or in part from transparent material. In this case, the electronic identification device is incorporated in a card which will be/is provided with the visual coding. The card is placed between the outer wall of the conduit part and the clamping sleeve, in such a manner that the visual coding on the card is visible through the transparent material.

Within the context of the inventive idea, alternative and equivalent embodiments of the present invention are conceivable, as will be clear to the person skilled in the art. The inventive idea is only limited by the attached claims.

## Claims

1. Method for producing a conduit part,
comprising:
- providing the conduit part;
- providing an electronic identification device which is provided with an identification datum;
- providing quality data of the conduit part;
- fitting the electronic identification device on an outer wall of the conduit part in order to connect the conduit part to the electronic identification device;
- reading out an identification datum from the electronic identification device;
and
- providing the visual coding on an outer wall of the conduit part, wherein the visual coding comprises at least an indication of the identification datum of the electronic identification device,
wherein the electronic identification device is arranged between a clamping part and the outer wall of the conduit part, wherein the clamping part is configured to keep the electronic identification device in a fixed location on the outer wall.

2. Method according to Claim 1, wherein the method furthermore comprises:
- linking the identification datum of the electronic identification device with the quality data of the conduit part,
wherein the linking comprises storing the quality data of the conduit part in a programmable memory of the electronic identification device, wherein the stored quality data can be read from the electronic identification device.

3. Method according to Claim 1, furthermore comprising:
- linking the identification datum of the electronic identification device with the quality data of the conduit part,
wherein the linking comprises:
- storing the identification datum of the electronic identification device and the quality data of the conduit part in an external database.

4. Method according to one of the preceding claims, wherein the method comprises determining a location datum of the conduit part as part of the quality data of the conduit part.

5. Method according to Claim 3, wherein an indication of the visual coding is stored with the stored data in the external database.

6. Method according to one of the preceding claims, wherein the visual coding also comprises an indication of one or more quality data of the conduit part.

7. Method according to Claim 1 wherein connecting the conduit part to the electronic identification device comprises:
providing a recess in the inner wall or outer wall of the conduit part, the recess being configured to accommodate the electronic identification device, and click-fitting or
pushing the electronic identification device into the recess.

8. Method according to Claim 1, wherein providing the visual coding on the outer wall of the conduit part is carried out by:
printing the visual coding or by engraving the visual coding or by laser-engraving the visual coding or by applying a label containing the visual coding.

9. Method according to Claim 8, wherein the visual coding is arranged on a clamping sleeve.

10. Method according to Claim 9, wherein the clamping sleeve is made from plastic and the electronic identification device is cast in the clamping sleeve.

11. Method according to Claim 1, wherein the clamping part is made completely or in part from transparent material, and the electronic identification device is incorporated in a card which will be/is provided with the visual coding, wherein the card is placed between the outer wall of the conduit part and the clamping part, in such a manner that the visual coding on the card is visible.

12. Conduit part provided with an electronic identification device, wherein the conduit part comprises a visual coding on an outer wall, wherein the visual coding comprises at least an indication of the identification datum of the electronic identification device, and
wherein the electronic identification device which is provided with an identification datum is arranged on or in an outer wall of the conduit part between a clamping part and the outer wall of the conduit part, wherein the clamping part is configured to keep the electronic identification device in a fixed location on the outer wall.

13. Conduit part provided with an electronic identification device according to Claim 12, wherein the conduit part comprises a visual coding on an outer wall, wherein the visual coding comprises at least an indication of the identification datum of the electronic identification device.

14. Conduit part according to Claim 12 or 13, wherein the electronic identification device comprises a programmable memory for storing data, and wherein quality data of the conduit part are stored in the programmable memory, and wherein the stored quality data can be read from the electronic identification device.

15. Conduit part according to one of the preceding Claims 12 - 14, wherein the electronic identification device is provided with a wireless data interface for reading out data from the electronic identification device by wireless communication between the electronic identification device and a read-out device via the wireless data interface.

16. Conduit part according to one of the preceding Claims 12 - 15, wherein the electronic identification device is provided with a wireless data interface for storing the quality data of the conduit part in the programmable memory by wireless communication between the electronic identification device and a programming device for programming the programmable memory.

17. Conduit part according to one of the preceding Claims 12 - 16, wherein the electronic identification device is arranged between two parts of the conduit part.

18. Conduit part according to one of the preceding Claims 12 - 17, wherein the visual coding of the linked data comprises one or more of a barcode, a readable script code or a symbol code.

19. Conduit part according to one of the preceding Claims 12 - 18, wherein a clamping sleeve is the clamping part for keeping the electronic identification device in a fixed location on the outer wall.
